Europäisches Patentamt

European Patent Office

Office européen des brevets

(19)

(11) Publication number: **0 285 572 B1**

## (12) EUROPEAN PATENT SPECIFICATION

(45) Date of publication of patent specification: **04.11.92**

(51) Int. Cl.5: **B32B 17/10,** C03C 27/12, C03C 17/32, B05D 3/12, B05D 3/06

(21) Application number: **88830083.7**

(22) Date of filing: **02.03.88**

(54) **Apparatus and process for the manufacturing of sheets of safety glass with a superficial coating of plastic material.**

(30) Priority: **31.03.87 IT 4779387**

(43) Date of publication of application:
**05.10.88 Bulletin 88/40**

(45) Publication of the grant of the patent:
**04.11.92 Bulletin 92/45**

(84) Designated Contracting States:
**AT BE CH DE ES FR GB IT LI LU NL SE**

(56) References cited:
**EP-A- 0 028 903**
**EP-A- 0 233 519**
**FR-A- 2 295 922**

(73) Proprietor: **Società Italiana Vetro - SIV S.p.A. Zona Industriale**
**I-66050 San Salvo (Chieti)(IT)**

(72) Inventor: **Capriotti, Luigi**
**5 Via Alberto da Giussano**
**I-63037 Porto D'Ascoli AP(IT)**
Inventor: **Puccinelli, Massimo**
**35 Via delle Magnolie**
**I-66054 Vasto CH(IT)**

(74) Representative: **Bazzichelli, Alfredo et al**
**c/o Società Italiana Brevetti S.p.A. Piazza di Pietra, 39**
**I-00186 Roma(IT)**

Rank Xerox (UK) Business Services

EP 0 285 572 B1

## Description

Background of the Invention

1. Field of the Invention

The present invention relates to an apparatus and process for the manufacturing of a sheet of safety glass, for use in motor cars or buildings, provided with a coating of plastic material for improving its behaviour on breaking.

2. Desription of the Prior Art

Sheets of safety glass are known in the prior art typically comprising a glass substrate and a coating of plastic material applied on one of the two surfaces of the sheet.

In the case of use of such safety glass as a motor car windscreen, the plastic coating serves to avoid injuries to the passengers caused by sharp fragments in the case of breaking. Moreover the plastic coating should also have particular mechanical and optical properties, such as properties of non-tearing, self-healing, resistance to abrasion and to ageing, in order to meet the tests required by the International Standards, such as DIN, ECE, ASA standards and the like.

Compositions and methods are known in the prior art for producing a coating of plastic material to be applied on a glass substrate.

Typically, Italian published application n. 19459A/86 (corresponding to EP-A-0 233 519, priority: 19.02.86; date of publication of application: 26.08.87) describes a composition based upon polycaprolactones, acryl monomers, aliphatic polyisocyanates, flowing agents, reaction catalysts and the like selected and mixed one to the other, in such a way as to be particularly able to form a plastic coating with the desired optical and mechanical features and able to provide the glass substrate with the required safety characteristics. A composition of this type is sprayed in a liquid state with a viscosity from 40 to 200 mPa•s (centipoise) on a glass substrate which, in the case of use in motor cars, has been previously cut and curved to the desired configuration.

Immediately after spraying, the glass substrate is caused to rotate horizontally at a speed from 10 to 50 rpm, so as to ensure a levelling of the liquid film and maintaining of a uniform thickness on the whole surface of the substrate.

The polimerization of the sprayed liquid takes place directly on the substrate to which the coating intimately adheres and successive treatments by infrared and ultraviolet irradiation help to complete it.

As in a single spraying operation it is advisable to lay a thickness from 80 to 150 $\mu$m, further spraying and polimerization operations can be carried out to reach a coating thickness sufficient to provide the glass with the desired safety characteristics.

For the manufacture on a commercial scale of safety sheets of glass provided with a plastic coating of high optical and mechanical quality, typically obtained by a composition and a process as previously described, the problem arises of ensuring a sufficient centrifugal force to the liquid layer during the treatment by infrared and ultraviolet irradiation and moreover it is necessary to have the possibility of repeating the coating and polimerization process a number of times until the desired thickness is obtained without affecting the production times.

Summary of the Invention

An object of the present invention is an apparatus for the application of a coating of plastic material including a plurality of machines for effecting spraying and irradiation operations in series for the manifacture of a sheet of safety glass of the type having said coating applied on one of its two opposed surfaces by said spraying and irradiation operations, said apparatus comprising: a closed ring track along which a sheet loading station, a spraying station, infrared and ultraviolet irradiation stations and a sheet unloading station are positioned in successive relationship; a self-propelling carriage running along said track; a power supply borne on said carriage; a control processor unit for programming and controlling said operations, borne on said carriage and powered by said power supply; an electric motor for driving said carriage, borne on said carriage, powered by said power supply and controlled by said processor unit; a rotary shaft vertically mounted on said carriage in driving connection with said electric motor; a frame fixed horizontally on top of said shaft for receiving at said loading station said sheet of glass to be subjected to said operations; suction cups fixed to said frame for retaining said sheet; said processor unit being programmed to provide control instructions for cyclically subjecting said sheet of glass to said spraying and irradiation operations a number of times sufficient to obtain a desired thickness of coating on said sheet and simultaneously rotating said sheet for a centrifugation of said coating after said spraying operation and during said irradiation operations.

A further object of the present invention is a process for the application of a coating of plastic material including spraying and irradiation operations in series for the manufacture of a sheet of safety glass of the type having said coating applied on one of its two opposed surfaces by said spraying and irradiation operations, said process comprising: positioning said sheet of glass on a self-propelling carriage provided with an electric motor and a control processor unit for controlling and programming said operations; carrying said sheet of glass along a closed ring path for subjecting it successively to operations of spraying, infrared irradiation and ultraviolet irradiation and rotating said sheet horizontally for centrifugating said coating during the irradiation operations; and cyclically repeating said steps a number of times sufficient to obtain a coating of a desired thickness on said sheet.

The advantages obtained with the present invention consist in that it is possible to realize a carousel of carriages, each carriage being able to centrifugate the sheet of glass during its travel, capable of obtaining different depths of coating for each sheet depending on the individual requirements, thus making the plant fit to respond to the requirements of furnishing different types of final product without effecting the production times.

It has to be understood, however, that while the apparatus and process according to the present invention are particularly referred to a coating obtained with the compositions described in the Italian published patent application number 19459A/86, the same apparatus can be advantageously used for the manufacturing on a commercial scale of sheets of safety glass with plastic coating formed by other types of compositions.

Moreover the glass substrate can be a sheet of laminated safety glass, tempered or half-tempered safety glass, or curved or flat monolithic glass.

## Brief description of the Drawings

The present invention will be better understood with reference to the accompanying drawings in which, for an illustrative and not limitative purpose, the manufacture of a curved safety glass for motor cars is illustrated.

Figure 1 shows a general and schematic view of the apparatus for the manufacture of safety glass sheets according to the present invention;

figure 2 shows a side view of the automatic and self-propelled carriage, object of the present invention; and

figure 3 shows a plan view of the carriage of figure 2.

## Description of the preferred embodiment

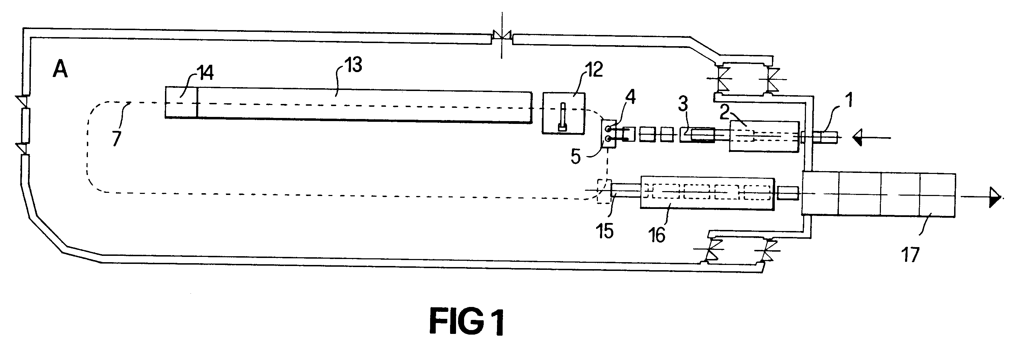

Referring to figures 1 to 3, a plant for the manufacture of sheets of safety glass according to the invention comprises a horizontal conveyor 1, a machine 2 for washing and drying the sheets of glass, horizontal conveyor belts 3, a machine 4 for loading the sheets of glass and a carriage 5, receiving said glass.

Additionally the plant comprises a spraying station or device 12, a tunnel oven 13 for infrared irradiation, a tunnel oven 14 for ultraviolet irradiation, a machine 15 for unloading the coated sheets of glass from the carriage, a tunnel oven 16 for infrared irradiation and a successive hot air tunnel oven 17 for completing the polimerization reaction.

A sheet of glass previously cut and curved, is loaded on the conveyor table 1 and introduced into a room A, which is carefully insulated from the outside and dust-free. The sheet is washed and dried by the machine 2 and then transferred by means of the conveyors 3 and the machine 4 to the carriage 5. The carriage 5 is powered by means of a bank of batteries mounted directly on board, so as to be completely independent from the rest of the manufacturing line. An electric motor also mounted on board the carriage, enables the travelling to be effected by operating metal wheels 6 rolling on a closed ring metal track secured to the floor, the path of which is indicated in 7.

In order to control the operation sequence, on the carriage 5 a control processor unit is mounted provided with a programmable unit for the control of the production cycle.

The carriage 5 is capable of carrying out the following operations in a self-sufficient manner: travelling along the track 7, centrifugation of the sheet of glass, production of vacuum to enable the sheet to be fixed, speed regulation and control in relation to the operation being carried out.

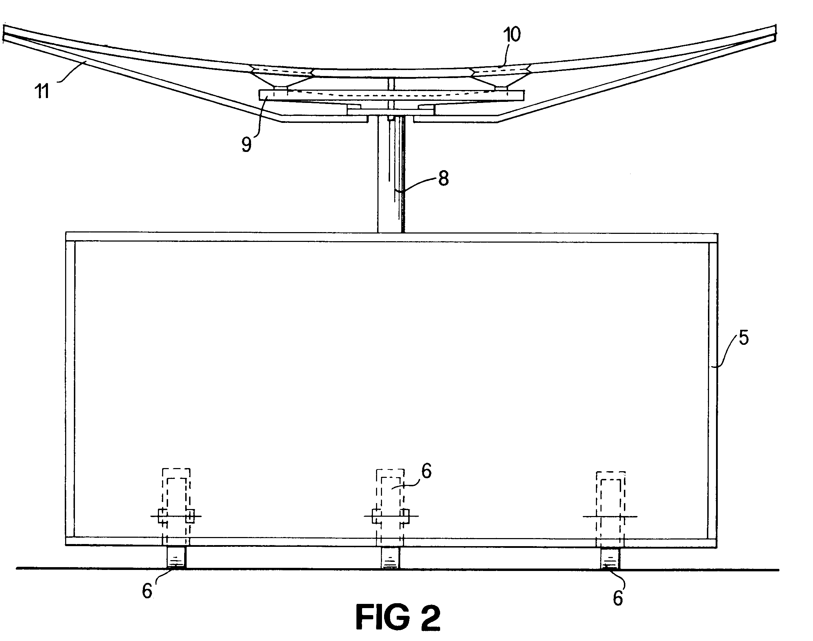

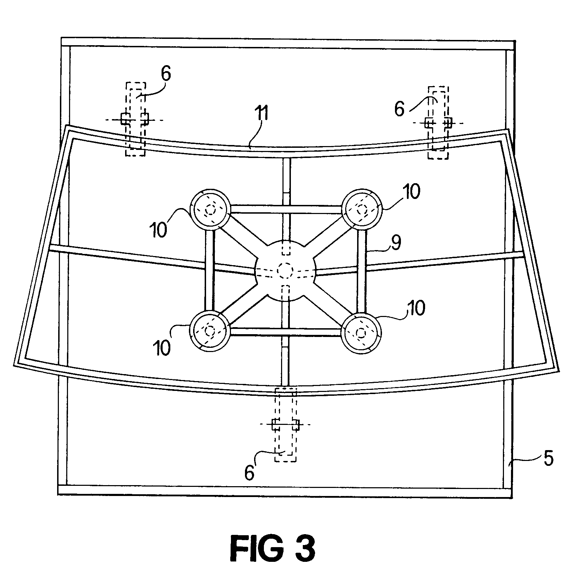

The carriage 5 is provided with a mechanical system for the centrifugation of the sheet of glass. In fact the sheet is positioned on a frame 9 (fig. 2, 3) provided with suction cups 10 and horizontally rotated by a rotating shaft 8 having a vertical axis. The angular speed of the shaft can be controlled in a continuous manner at about 200 rpm. On the same rotating shaft 8, a frame 11 is fixed having the same configuration as the sheet to be coated and on which the sheet is positioned. The frame 11, by means of its outer rim, serves the purpose of preventing the liquid laid on the concave curved area of the sheet from dropping beyond the edge of the sheet, and wetting the underlying surface. Once centered on the carriage 5, the sheet of glass is fixed to the frame 11 by means of the suction cups 10.

The carriage 5 starts its travel and following the path of the track 7 moves to the spraying station 12 where it stops and an amount of liquid is sprayed to obtain a coating depth from 80 to 150 μm.

As soon as the spraying is completed, the shaft 8 starts to rotate with an angular speed from 10 to 50 rpm.

At the same time the carriage 5 moves again and passes through the tunnel oven 13 where it is subjected to an infrared irradiation for a time from 5 to 10 minutes. Successively the carriage 5 passes through the tunnel oven 14 where it is subjected to an ultra-violet irradiation for a time of from 2 to 10 seconds. Upon completion of the ultraviolet irradiation, the movement of the shaft 8 is stopped.

The carriage 5 runs the remaining portion of the track 7 reaching an unloading station where a machine 15 takes the sheet from the carriage 5 and delivers it to a first tunnel oven 16 for a final infrared irradiation and to a second tunnel 17 for a final hot air drying.

Whenever it is desired to increase the thickness of the polymerized solid coating, the carriage 5 repeats the spraying operation and the infrared and ultraviolet irradiation operations for a number of times necessary to obtain the desired thickness.

## Claims

1. Apparatus for the application of a coating of plastic material including a plurality of machines for effecting spraying and irradiation operations in series for the manifacture of a sheet of safety glass of the type having said coating applied on one of its two opposed surfaces by said spraying and irradiation operations, said apparatus comprising: a closed ring track (7) along which a sheet loading station (4), a spraying station (12), infrared (13) and ultraviolet (14) irradiation stations and a sheet unloading station (15) are positioned in successive relationship; a self-propelling carriage (5) running along said track (7); a power supply borne on said carriage; a control processor unit for programming and controlling said operations, borne on said carriage and powered by said power supply; an electric motor for driving said carriage, borne on said carriage, powered by said power supply and controlled by said processor unit; a rotary shaft (8) vertically mounted on said carriage in driving connection with said electric motor; a frame (9; 11) fixed horizontally on top of said shaft (8) for receiving at said loading station (4) said sheet of glass to be subjected to said operations; suction cups (10) fixed to said frame for retaining said sheet; said processor unit being programmed to provide control instructions for cyclically subjecting said sheet of glass to said spraying and irradiation operations a number of times sufficient to obtain a desired thickness of coating on said sheet and simultaneously rotating said sheet for a centrifugation of said coating after said spraying operation and during said irradiation operations.

2. Process for the application of a coating of plastic material including spraying and irradiation operations in series for the manufacture of a sheet of safety glass of the type having said coating applied on one of its two opposed surfaces by said spraying and irradiation operations, said process comprising: positioning said sheet of glass on a self-propelling carriage (5) provided with an electric motor and a control processor unit for controlling and programming said operations; carrying said sheet of glass along a closed ring path (7) for subjecting it successively to operations of spraying, infrared irradiation and ultraviolet irradiation and rotating said sheet horizontally for centrifugating said coating during the irradiation operations; and cyclically repeating said steps a number of times sufficient to obtain a coating of a desired thickness on said sheet.

3. A process according to claim 2, wherein said sheet is of laminated safety glass.

4. A process according to claim 2, wherein said sheet is of a tempered or a half-tempered safety glass.

5. A process according to claim 2, wherein said sheet is of a previously curved monolithic glass.

6. A process according to claim 2, wherein said sheet is of a flat monolithic glass.

## Patentansprüche

1. Vorrichtung zum Auftragen einer Beschichtung aus Kunststoffmaterial, die mehrere Maschinen zum wirksamen, aufeinanderfolgenden Aufspritzen und Bestrahlen zur Herstellung einer Scheibe aus Sicherheitsglas der Art, bei der die Beschichtung durch Aufspritzen und Bestrahlen auf eine ihrer beiden gegenüberliegenden Seiten aufgetragen wird, enthält, wobei die Vorrichtung umfaßt: eine geschlossene Ringbahn (7), entlang derer eine Scheiben-Anhängestation (4), eine Aufspritzstation (12), Infrarot- (13) und Ultraviolett- (14) Bestrahlungsstationen und eine Scheiben-Abnahmestation (15) nacheinander angeordnet sind; einen selbstfahrenden Wagen (59), der an der Bahn (7) entlangläuft; eine von dem Wagen getragene stromzuführung; eine Steuerprozessoreinheit zur Programmierung und Steuerung der Vorgänge, die von dem Wagen getragen und Von der stromzuführung gespeist wird; einen Elektromotor zum Antrieb des Wagens, der von dem Wagen getragen, von der Stromzuführung gespeist und von der Prozessoreinheit gesteuert wird; eine senkrecht an dem wagen in Antriebsbeziehung zum Elektromotor angebrachte Drehwelle (8); einen horizontal auf der Welle (8) befestigten Rahmen (9, 11) zur Aufnahme der den Arbeitsgängen zu unterziehenden Glasscheibe an der Anhängestation (4); an dem Rahmen angebrachte Saugnäpfe (10) zum Halten der Scheibe, wobei die Prozessoreinheit so programmiert ist, daß sie steuerbefehle zur zyklischen, mehrmaligen Zuführung der Glasscheibe zum Aufspritzen und Bestrahlen erteilt, so daß eine gewünschte Dicke der Beschichtung auf der Scheibe erzielt wird, und zur gleichzeitigen Drehung der Scheibe, so daß die Beschichtung nach dem Aufspritzen und während des Bestrahlens zentrifugiert wird.

2. Verfahren zur Aufbringung einer Beschichtung aus Kunstetoffmaterial, das das aufeinanderfolgende Aufspritzen und Bestrahlen zur Herstellung einer Scheibe aus Sicherheitsglas, der Art, bei der die Beschichtung durch Aufspritzen und Bestrahlen auf eine ihrer beiden gegenüberliegenden Seiten aufgetragen wird, enthält, wobei das Verfahren umfaßt: Anbringen der Glasscheibe an einem selbstfahrenden Wagen (5), der mit einem Elektromotor und einer Steuerprozessoreinheit zur Steuerung und Programmierung der Vorgänge versehen ist, Transport der Scheibe an einer geschlossenen Ringbahn (7) entlang, um sie nacheinander dem Aufspritzen, der infraroten Bestrahlung und der ultravioletten Bestrahlung zuzuführen, sowie horizontales Drehen der Scheibe zum Zentrifugieren der Beschichtung während der Bestrahlung; und mehrmaliges, zyklisches Wiederholen der Schritte, bis eine Beschichtung gewünschter Dicke auf der Scheibe erreicht ist.

3. Verfahren nach Anspruch 2, wobei die Scheibe aus VerbundSicherheitsglas besteht.

4. Verfahren nach Anspruch 2, wobei die Scheibe aus Hartglas oder Halb-Hartglas besteht.

5. Verfahren nach Anspruch 2, wobei die Scheibe aus zuvor gebogenem monolithischem Glas besteht.

6. Verfahren nach Anspruch 2, wobei die Scheibe aus flachem monolithischem Glas besteht.

## Revendications

1. Appareil pour l'application d'un revêtement de matériel plastique comprenant une pluralité de machines pour effectuer des opérations d'aspersion et irradiation en succession pour la fabbrication d'une feuille de verre de sécurité du type ayant le revêtement appliqué sur une de ses deux surfaces opposées par suite des dites opérations d'aspersion et irradiation, le dit appareil comprenant: un chemin (7) annulaire fermé le long duquel une station (4) de chargement de feuilles, une station (12) d'aspersion, des stations d'irradiation infrarouge (13) et ultra-violette (14) et une station (15) de déchargement des feuilles sont placées en succession; un chariot automoteur (5) roulant le long du dit chemin (7); un alimentateur de force motrice portée par le dit chariot; une unité à ordinateur de contrôle pour programmer et contrôler les dites opérations, portée par le dit chariot et alimentée par le dit alimentateur de force motrice; un moteur électrique pour actionner le dit chariot, porté sur le dit chariot, alimenté par le dit alimentateur de force motrice et contrôlé par la dite unité à ordinateur; un arbre tournant (8) monté verticalement sur le dit chariot en connection d'actionnement avec le dit moteur électrique; un châssis (9,11) fixé horizontalement au-dessu du dit arbre (8) pour recevoir dans la dite station (4) de chargement la dite feuille de verre qui doit être soumise aux dites opérations; des ventouses (10) fixées au dit châssis pour retenir la dite feuille; la dite unité à ordinateur étant programmée pour fournir des instructions de contrôle pour soumettre cycliquement la dite feuille de verre aux dites operations d'aspersion et d'irradiation pour un nombre de fois suffisant à obtenir l'épaisseur de revêtement désiré sur la dite feuille et dans le même temps faire tourner la dite feuille pour centrifuger le ditrevêtement âprès l'opération d'aspersion et pendant les opérations d'irradiation.

2. Procédé pour l'application d'un revêtement de matériel plastique comprenant des opérations d'aspersion et d'irradiation en succession pour la fabrication d'une feuille de verre de sécurité du type ayant le dit revêtement appliqué sur une de ses deux surfaces opposées par suite de dite opération d'aspersion et d'irradiation, le dit procédé comprenant: positionner la feuille de verre sur un chariot automoteur (5) pourvu d'un moteur électrique et d'une unité à ordinateur de contrôle pur contrôler et programmer les dites opérations; transporter la dite feuille de verre le long d'un chemin annulaire fermé (7) pour la soumettre successivement à des opérations d'aspersion, d'irradiation infra-rouge e d'irradiation ultra-violette et faire tourner la dite feuille horizontalement pur centrifuger le dit revêtement pendant les opérations d'irradiation; et répéter cycliquement les dites opérations un nombre de fois suffisant à obtenir un revêtement d'épaisseur désiré sur la dite feuille.

3. Procédé selon la revendication 2, où la dite feuille est un verre de sécurité laminé.

4. Procédé selon la revendication 2, où la dite feuille est un verre de sécurité trempé ou semi-trempé.

5. Procédé selon la revendication 2, où la dite feuille est de verre monolithique préalableiment courbée.

6. Procédé selon la revendication 2, où la dite feuille est de verre monolithique plat.

**FIG 1**

EP 0 285 572 B1

**FIG 2**

EP 0 285 572 B1

FIG 3